# EUROPÄISCHE PATENTSCHRIFT

(11) **EP 2 648 933 B1**
(45) Veröffentlichungstag und Bekanntmachung des Hinweises auf die Patenterteilung: **29.08.2018**
(21) Anmeldenummer: 11773409.5
(22) Anmeldetag: 20.10.2011
(51) Int. Cl.: B60L 11/18, B60L 11/14, B60L 3/04, B60W 30/19

(54) **FAHRZEUG UND VERFAHREN ZUM BETREIBEN EINES FAHRZEUGS**
VEHICLE AND METHOD FOR RUNNING THE VEHICLE
VÉHICULE ET PROCÉDÉ POUR OPÉRATION D'UN VÉHICULE

(30) Priorität: 07.12.2010 DE 102010053624
(43) Veröffentlichungstag der Anmeldung: 16.10.2013
(73) Patentinhaber: Sew-Eurodrive GmbH & Co. KG, 76646 Bruchsal (DE)
(72) Erfinder: BUDZEN, Harald, 76829 Landau (DE)
(74) Vertreter: Tüngler, Eberhard
(86) Internationale Anmeldenummer: PCT/EP2011/005287
(87) Internationale Veröffentlichungsnummer: WO 2012/076081

(56) Entgegenhaltungen:
- WO-A1-2007/086263
- WO-A1-2010/109749
- DE-A1- 10 308 692
- DE-A1-102009 004 167
- JP-A- 2006 112 484

## Beschreibung

Die Erfindung betrifft ein Fahrzeug und ein Verfahren zum Betreiben eines Fahrzeugs.

Es ist bekannt, bei einem PKW ein Schaltgetriebe zu betätigen, wobei vor dem Schalten des Gangs des Schaltgetriebes der Fahrer des Fahrzeugs eine Kupplung zwischen Motor und Getriebe betätigt, so dass die Motorwelle von der Getriebeeingangswelle entkoppelt wird.

Aus der WO 2010/109749 A1 ist als nächstliegender Stand der Technik eine Steuerung für ein Fahrzeug bekannt und offenbart die Präambel des unabhängigen Anspruchs 1 und die Präambel des unabhängigen Anspruchs 3. bekannt. Aus der JP 2006 112 484 A ist eine Leistungsübertragungsvorrichtung bekannt.

Aus der WO 2007/086263 A1 ist ein elektrischer Motor bekannt.

Aus der DE 10 2009 004167 A1 ist eine Steuervorrichtung für ein Getriebe bekannt.

Der Erfindung liegt daher die Aufgabe zugrunde, ein Fahrzeug weiterzubilden, wobei der Umweltschutz verbessert werden soll, insbesondere die Emissionen verringert werden sollen.

Erfindungsgemäß wird die Aufgabe bei dem Fahrzeug nach den in Anspruch 1 und bei dem Verfahren nach den in Anspruch 3 angegebenen Merkmalen gelöst.

Wichtige Merkmale der Erfindung bei dem Fahrzeug mit einem von einem Wechselrichter speisbaren Elektromotor sind, dass eine Steuerung mit dem Wechselrichter, aufweisend eine Leistungsstufe und eine die Leistungsstufe ansteuernde Signalelektronik, mittels einer Steuerleitung verbunden ist,
wobei der Statorwicklung des Elektromotor Strom zuführbar ist von Leistungshalbleitern der Leistungsstufe des Wechselrichters,
wobei die Steuerleitung mit der Signalelektronik und/oder mit der Leistungsendstufe derart verbunden und ausgeführt ist, dass die Stromversorgung der Statorwicklung unterbrechbar ist,
insbesondere durch ein von der Steuerung an den Wechselrichter gesendetes Freischaltsignal.

Von Vorteil ist dabei, dass eine Entkopplung der Energie zuführenden Elektronik von den Statorwicklungen des Motors ausführbar ist und somit der Motorwelle und der hiermit verbundenen Getriebeeingangswelle keine weitere Leistung zuführbar ist vom Wechselrichter. Somit ist ein elektronisch bewirktes Auskuppeln der motorischen Antriebsleistung mit Ausnahme des noch vorhandenen Trägheitsmoments der Motorwelle. Dieses Freischaltesignal ist auch sicherheitsgerichtet erzeugbar und auch redundant verwendbar zur Erhöhung der Sicherheit. Das Freischaltesignal ist bei Erkennen eines gefährlichen Zustandes von der Steuerung übermittelbar. Alternativ ist es aber auch zum Auskuppeln verwendbar, um eine Schalten des Ganges des Getriebes zu ermöglichen. Ebenso ist es aber auch einsetzbar, um ein Wechseln des Übersetzungsverhältnisses bei einem Getriebe mit kontinuierlich veränderbarem Übersetzungsverhältnis zu erleichtern oder gar zu ermöglichen.

Bei einer vorteilhaften Ausgestaltung werden der Steuerung Sensorsignale zugeführt, die von Sensoren zur Erfassung von Zustandsgrößen des Fahrzeugs oder eines Teils des Fahrzeugs der Steuerung zugeleitet werden. Von Vorteil ist dabei, dass
Bei einer vorteilhaften Ausgestaltung treibt der Elektromotor die Räder des Fahrzeugs über zumindest ein Getriebe mit wählbarer Übersetzungszahl, insbesondere Schaltgetriebe, an,
insbesondere wobei die Motorwelle mit der Eintriebswelle des Getriebes drehfest verbunden ist. Von Vorteil ist dabei, dass ein Schalten des Gangs während des Anliegens des Freischaltesignals ausführbar ist. Außerdem ist das Entkuppeln hierbei in sehr einfacher Weise ermöglicht, da es rein elektronisch bewirkbar ist, insbesondere ohne zusätzliche Teile.

Bei einer vorteilhaften Ausgestaltung erfasst einer der Sensoren die Istdrehzahl der Eintriebswelle des Getriebes. Von Vorteil ist dabei, dass das Wechseln der Übersetzungszahl erst nach dem Stillstand oder zumindest im Wesentlichen Stillstand ausführbar ist und somit das Getriebe geschützt wird.

Bei einer vorteilhaften Ausgestaltung erfasst einer der Sensoren die gewählte Übersetzungszahl, insbesondere den eingeschalteten Gang. Von Vorteil ist dabei, dass erst nach einer Rückmeldung der Wechselrichter wieder dem Motor Strom zuführt.

Bei einer vorteilhaften Ausgestaltung ist die Steuerung mittels einer Steuerleitung mit einem Stellmotor verbunden, mit welchem die Übersetzungszahl des Getriebes einstellbar ist, insbesondere mit welchem der Gang des Getriebes einstellbar ist. Von Vorteil ist dabei, dass die Steuerung ein automatisches Wechseln des Gangs und/oder der Übersetzungszahl ausführbar macht.

Wichtige Merkmale der Erfindung bei dem Verfahren zum Betreiben eines Fahrzeugs sind, dass das Fahrzeug eine Steuerung aufweist,
wobei der Steuerung Werte zugeführt werden, die von Sensoren des Fahrzeugs erfasst werden, und/oder wobei der Steuerung Werte zugeführt werden, die über Eingabemittel eingegeben werden,
wobei die Steuerung abhängig von den zugeführten Werten ein Freischaltsignal, insbesondere Abschaltsignal, an den Wechselrichter übermittelt, welcher die Statorwicklung des Elektromotors des Fahrzeugs speist,
wobei das Freischaltsignal bewirkt, dass die vom Wechselrichter versorgte Statorwicklung des Elektromotors stromlos wird. Von Vorteil ist dabei, dass ein sehr schnell wirksames Entkoppeln des Leistungsflusses vom Wechselrichter zum Motor, insbesondere zu dessen Statorwicklung, ermöglicht ist. Somit ist ein sicherer Zustand schnell und in einfacher Weise erreichbar.

Bei einer vorteilhaften Ausgestaltung wird zum Wechseln des Übersetzungsverhältnisses
- in einem ersten Schritt ein Freischaltsignal von der Steuerung an den Wechselrichter übermittelt,
- in einem nachfolgenden zweiten Schritt die Drehzahl der Eintriebswelle des Getriebes, insbesondere welche drehfest mit der Motorwelle verbunden ist, und/oder die Drehzahl der Motorwelle auf Unterschreiten eines kritischen Wertes überwacht
und nach Unterschreiten des kritischen Drehzahlwertes ein derartiges Ansteuersignal an einen Stellmotor übermittelt und dieser derart angesteuert, dass dieser das vorgegebene Übersetzungsverhältnis des Getriebes einstellt, insbesondere den von der Steuerung vorgegebenen Gang des Getriebes einlegt.

Von Vorteil ist dabei, dass vor dem Ausführen eines Wechselns des Übersetzungsverhältnisses ein Entkoppeln sehr schnell und sicher bewirkbar ist. Somit ist ein automatisch bewirktes Wechseln des Übersetzungsverhältnisses mittels eines Stellmotors ermöglicht. Somit ist ein handbetätigtes Schalten entbehrlich.

Bei einer vorteilhaften Ausgestaltung wird in einem dritten Schritt das eingelegte Übersetzungsverhältnis des Getriebes erfasst und überprüft, ob das vorgegebene Übersetzungsverhältnis eingestellt ist, insbesondere der vorgegebene Gang eingelegt ist, und abhängig vom Ergebnis der Überprüfung das Freischaltsignal abgeschaltet wird, insbesondere also der Wechselrichter dem geregelten Betrieb freigegeben wird, so dass die Statorwicklung bestromt wird. Von Vorteil ist dabei, dass die Sicherheit erhöht ist und der Schutz des Getriebes verbessert ist.

Bei einer vorteilhaften Ausgestaltung wird das Freischaltsignal einerseits an die Leistungsstufe des Wechselrichters übermittelt und andererseits auch an die Signalelektronik, so dass nach Erhalt des Freischaltsignals von der Signalelektronik das Erzeugen von pulsweitenmodulierten Ansteuersignalen gestoppt wird. Von Vorteil ist dabei, dass ein redundantes Entkoppeln erreichbar ist und somit die Sicherheit erhöht ist. Dabei ist die Signalelektronik in der Lage, nach Erhalt des Freischaltsignals derartige Ansteuersignale für die Leistungshalbleiter der Endstufe zu erzeugen, dass diese in den gesperrten Zustand übergehen, insbesondere wobei alle Leistungshalbleiterschalter in diesen Zustand übergehen, durch die Motorstrom hindurchleitbar ist. Das an die Leistungsendstufe ist zum Abschalten der Versorgungsspannung derjenigen Treiberstufen der Leistungsstufe verwendbar, welche die Leistungshalbleiterschalter der Endstufe ansteuern. Alternativ oder zusätzlich ist auch das Eingangssignal derart logisch verknüpfbar mit dem Freischaltsignal, dass ebenfalls ein Sperren der Leistungshalbleiterschalter bewirkbar ist. Auch auf diese Weise ist die Sicherheit noch weiter erhöhbar.

Bei einer vorteilhaften Ausgestaltung wird von der Steuerung aus Sensorsignalen bestimmt, ob das Fahrzeug in einem gefährlichen Zustand sich befindet, wobei davon abhängig von der Steuerung ein Freischaltsignal an den Wechselrichter übermittelt wird. Von Vorteil ist dabei, dass die Sicherheit erhöhbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

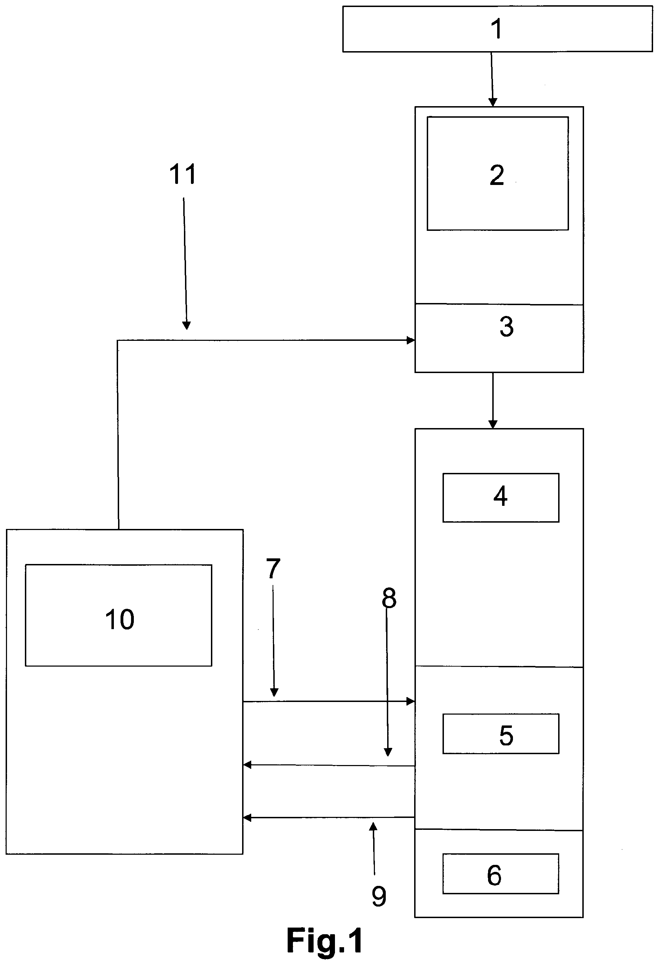

In der Figur 1 ist das Antriebssystem eines Fahrzeuges schematisch skizziert.

Als elektrische Leistungsversorgung 1 ist eine elektrische Energiequelle vorgesehen, beispielhaft ein Energiespeicher, wie Batterie oder Akkumulator, oder ein von einem Verbrennungsmotor angetriebener Elektrogenerator.

Aus der elektrischen Leistungsversorgung 1 ist ein Wechselrichter versorgt, der eine Signalelektronik 2 aufweist, die eine Leistungsendstufe 3 ansteuert. Vorzugsweise erzeugt die Signalelektronik 2 hierzu pulsweitenmodulierte Ansteuersignale, die an die Leistungshalbleiter der Leistungsendstufe 3 geleitet werden. Diese sind hierbei in Halbbrücken angeordnet, welche aus einer unipolaren Spannung der elektrischen Leistungsversorgung 1 versorgt sind.

Über die Leistungshalbleiterschalter werden die Versorgungsleitungen des Motors 4 und somit dessen Statorwicklungen mit elektrischem Strom versorgt.

Durch ein über die Signalleitung 11 an die Leistungsendstufe 3 oder die Signalelektronik 2 übertragbares Signal ist ein Sperren der Leistungshalbleiter der Endstufe 3 ermöglicht.

Durch Sperren der Leistungshalbleiter werden somit die Statorwicklungen stromlos. Auf diese Weise ist ein Stoppen von weiterer Energiezufuhr aus dem Wechselrichter an den Elektromotor 4 ermöglicht.

Der Motor 4 treibt über ein Getriebe 5 ein Differential 6 an, von dem wiederum die Räder des Fahrzeugs angetrieben werden. Das Getriebe 5 ist dabei als Schaltgetriebe ausgeführt, wobei das Schalten der Gänge, also das Wechseln der Übersetzungszahl, von einem Stellmotor bewirkt wird.

Der Stellmotor wird von der Steuerung 10, also Motorsteuergerät 10, des Fahrzeugs angesteuert über die Ansteuersignalleitung 7 für den Stellmotor des Getriebes.

Das Getriebe weist einen Sensor 8 auf, der die Detektion der Übersetzungszahl des Getriebes ermöglicht. Das vom Sensor 8 erzeugte Sensorsignal wird der Steuerung 10 zugeführt.

Außerdem wird mittels eines weiteren Sensors die Istdrehzahl 9 der Eintriebswelle erfasst und ebenfalls der Steuerung 10 zugeführt.

Zum Ausführen eines Schaltvorgangs, also eines Wechselns des Getriebegangs, wird von der Steuerung ein Freischaltsignal an den Wechselrichter über die Signalleitung 11 übermittelt. Dabei entspricht dieses Freischaltsignal einer sicherheitsgerichteten Abschaltung des Wechselrichters, also einem STO-Signal. Zur Erhöhung der Sicherheit ist mit dem Freischalten nicht nur das Sperren der Leistungshalbleiter sondern auch ein Abschaltsignal für die Erzeugung der pulsweitenmodulierten Ansteuersignale bewirkt. Es wird also das Signal 11 nicht nur der Leistungsendstufe sondern auch der Signalelektronik 2, insbesondere deren Mikrocontroller, zugeführt, um ein redundantes Abschalten der Motorspannung zu erzeugen. Auf diese Weise ist eine erhöhte Sicherheit gewährleistet.

Somit ist die Leistungszufuhr an den Motor gestoppt. Nur die noch mit der Getriebeeintriebswelle verbundene Motorwelle samt Rotor kann ihre rotatorische Energie ans Getriebe weitergeben.

Zwar wird bei Ausführung des Motors als Synchronmotor, insbesondere also bei Ausführung des Rotors mit Dauermagneten, von dem als Remanenzfeld im Statorblechpaket abklingenden Magnetfeld eine Bremswirkung mit den Dauermagneten erzeugt. Diese Bremswirkung wird allerdings nur kurzzeitig erzeugt, verringert aber die vom Motor an das Getriebe zugeführte rotative Leistung.

Sobald die Istdrehzahl der Getriebeeintriebswelle, welche der Motorwellendrehzahl entspricht, einen kritischen Wert unterschreitet, wird das Wechseln der Übersetzungszahl angesteuert, indem dem Stellmotor des Getriebes 5 ein entsprechendes Ansteuersignal zugeführt wird.

Sobald der neue Getriebegang eingelegt ist, was durch ein entsprechendes Signal des Sensors 8 für Detektion der Übersetzungszahl des Getriebes gemeldet wird, wird der das Freischaltsignal des Wechselrichters weggenommen und somit der Wechselrichter wieder geregelt betreibbar.

In der Signalelektronik 2 ist auch eine Regeleinheit angeordnet, welche aus den erfassten Motorstrom auf einen vorgegebenen Sollwert hin regelt, indem die Motorspannung mittels Pulsweitenmodulation gestellt wird.

Die Steuerung 10 steuert auch weitere Zustände des Fahrzeugs. Beispielsweise werden ihr weitere Sensorsignale zugeführt und bei Erreichen eines durch ein Verfahren zur Bestimmung der Stabilität bestimmten kritischen Zustandes das Freischaltsignal ausgegeben.

### B zugsz ich nlist

1 Elektrische Leistungsversorgung
2 Signalelektronik
3 Leistungsendstufe
4 Elektromotor
5 Getriebe
6 Differential
7 Ansteuersignalleitung für Stellmotor des Getriebes
8 Sensor für Detektion der Übersetzungszahl des Getriebes
9 Istdrehzahl der Eintriebswelle
10 Motorsteuergerät
11 Signalleitung für Übertragung eines Ausschaltsignals, insbesondere STO-Signal

## Patentansprüche

1. Fahrzeug mit einer elektrischen Leistungsversorgung (1) wie einer Batterie oder Akkumulator oder einem von einem Verbrennungsmotor angetriebenen Elektrogenerator und einem von einem Wechselrichter speisbaren Elektromotor (4), wobei eine Steuerung (10), also Motorsteuergerät (10) des Fahrzeugs, mit dem Wechselrichter, aufweisend eine Leistungsendstufe (3) und eine die Leistungsendstufe (3) über pulsweitenmodullierte Ansteuersignale ansteuernde Signalelektronik (2), mittels einer Signalleitung (11) verbunden ist, wobei der Statorwicklung des Elektromotors (4) von Leistungshalbleitern der Leistungsendstufe (3) des Wechselrichters Strom zuführbar ist, **dadurch gekennzeichnet, dass**
die Signalleitung (11) mit der Signalelektronik (2) und mit der Leistungsendstufe (3) derart verbunden und ausgeführt ist, dass die Stromversorgung der Statorwicklung durch ein von der Steuerung an den Wechselrichter über die Signalleitung (11) gesendetes Freischaltsignal, das einer sicherheitsgerichteten Abschaltung des Wechselrichters, also einem STO-Signal entspricht, unterbrechbar ist, wobei der Elektromotor (4) die Räder des Fahrzeugs über zumindest ein Schaltgetriebe (5) und über ein Differential (6) antreibt, wobei die Motorwelle mit der Eintriebswelle des Schaltgetriebes (5) drehfest verbunden ist,
wobei einer von Sensoren (8) die Istdrehzahl der Eintriebswelle des Schaltgetriebes (5) erfasst, wobei einer der Sensoren (8) einen eingeschalteten Gang des Schaltgetriebes (5) erfasst, wobei die Steuerung (10) mittels einer Signalleitung (11) mit einem Stellmotor des Schaltgetriebes (5) zum Schalten der Gänge verbunden ist, mit welchem der Gang des Schaltgetriebes (5) einstellbar ist, wobei die Steuerung (10) das STO-Signal (11) nicht nur der Leistungsendstufe (3) sondern auch der Signalelektronik (2) und deren Mikrocontroller zuführt, wobei nicht nur das Sperren der Leistungshalbleiter sondern auch ein Abschaltsignal für die Erzeugung der pulsweitenmodulierten Ansteuersignale bewirkt wird, so dass die Motorspannung redundant abgeschaltet wird und wobei das Freischaltsignal auch zum elektronisch bewirkten Auskuppeln der motorischen Antriebsleistung mit Ausnahme des noch vorhandenen Trägheitsmoments einer Motorwelle des Elektromotors (4) verwendet wird.

2. Fahrzeug nach Anspruch 1,
**dadurch gekennzeichnet, dass**
der Steuerung (10) Sensorsignale zugeführt werden, die von Sensoren (8) zur Erfassung von Zustandsgrößen des Fahrzeugs oder eines Teils des Fahrzeugs der Steuerung (10) zugeleitet werden.

3. Verfahren zum Betreiben eines Fahrzeugs, nach mindestens einem der vorangegangenen Ansprüche,
wobei das Fahrzeug eine Steuerung (10), die also Motorsteuergerät (10) des Fahrzeugs ist, aufweist, wobei die Steuerung (10) mit einem Wechselrichter, aufweisend eine Leistungsendstufe (3) und eine die Leistungsendstufe (3) über pulsweitenmodulierte Ansteuersignale ansteuernde Signalelektronik (2), mittels einer Signalleitung (11) verbunden ist, wobei der Steuerung (10) Werte zugeführt werden, die von Sensoren (8) des Fahrzeugs erfasst werden, und/oder wobei der Steuerung (10) Werte zugeführt werden, die über Eingabemittel eingegeben werden,
**dadurch gekennzeichnet, dass**
die Steuerung (10) abhängig von den zugeführten Werten über die Signalleitung (11) ein Freischaltsignal, insbesondere Abschaltsignal, an den Wechselrichter übermittelt, welcher die Statorwicklung des Elektromotors (4) des Fahrzeugs speist, wobei das Freischaltsignal, das einer sicherheitsgerichteten Abschaltung des Wechselrichters bewirkt, dass die vom Wechselrichter versorgte Statorwicklung des Elektromotors (4) stromlos wird, wobei zum Wechseln des Übersetzungsverhältnisses
- in einem ersten Schritt ein Freischaltsignal von der Steuerung (10) an den Wechselrichter übermittelt wird,
- in einem nachfolgenden zweiten Schritt die Drehzahl der Eintriebswelle des Schaltgetriebes (5), welche drehfest mit der Motorwelle verbunden ist, und die Drehzahl der Motorwelle auf Unterschreiten eines kritischen Wertes überwacht wird
und nach Unterschreiten des kritischen Drehzahlwertes ein derartiges Ansteuersignal an einen Stellmotor des Schaltgetriebes (5) zum Schalten der Gänge übermittelt wird, dass dieser das vorgegebene Übersetzungsverhältnis des Schaltgetriebes (5) einstellt, insbesondere den von der Steuerung (10) vorgegebenen Gang des Schaltgetriebes (5) einlegt, wobei in einem dritten Schritt das eingelegte Übersetzungsverhältnis des Schaltgetriebes (5) erfasst wird und überprüft wird, ob das vorgegebene Übersetzungsverhältnis eingestellt ist und der vorgegebene Gang eingelegt ist, und abhängig vom Ergebnis der Überprüfung das Freischaltsignal abgeschaltet wird und also der Wechselrichter dem geregelten Betrieb freigegeben wird, so dass die Statorwicklung bestromt wird,
wobei das Freischaltsignal ein STO-Signal ist und einerseits an die Leistungsendstufe (3) des Wechselrichters und andererseits auch an die Signalelektronik (2) übermittelt wird, so dass nach Erhalt des Freischaltsignals von der Signalelektronik (2) das Erzeugen von pulsweitenmodulierten Ansteuersignalen gestoppt wird, so dass die Motorspannung redundant abgeschaltet wird,
und wobei das Freischaltsignal auch zum elektronisch bewirkten Auskuppeln der motorischen Antriebsleistung mit Ausnahme des noch vorhandenen Trägheitsmoments einer Motorwelle des Elektromotors (4) verwendet wird, um ein Schalten des Ganges des Schaltgetriebes (5) zu ermöglichen.

4. Verfahren nach mindestens einem der vorangegangenen Ansprüche,
**dadurch gekennzeichnet, dass**
von der Steuerung (10) aus Sensorsignalen bestimmt wird, ob das Fahrzeug in einem gefährlichen Zustand sich befindet, wobei davon abhängig ein Freischaltsignal an den Wechselrichter übermittelt wird.

## Claims

1. A vehicle with an electrical power supply (1) such as a battery or rechargeable battery or an electric generator driven by an internal combustion engine and an electric motor (4) which can be fed by an inverter,
wherein a control means (10), i.e. engine control unit (10) of the vehicle, is connected to the inverter, having a power output stage (3) and signal electronics (2) which drive the power output stage (3) by means of pulse-width modulated control signals, by means of a signal line (11),
wherein current can be supplied to the stator winding of the electric motor (4) from power semiconductors of the power output stage (3) of the inverter,
**characterised in that**
the signal line (11) is connected to the signal electronics (2) and to the power output stage (3) and embodied in such a way that the power supply of the stator winding can be interrupted by a disconnect signal transmitted by the control means to the inverter via the signal line (11), which signal corresponds to safety-related switching-off of the inverter, i.e. an STO signal,
wherein the electric motor (4) drives the wheels of the vehicle by means of at least one manual transmission (5) and by means of a differential (6),
wherein the motor shaft is connected non-rotatably to the input shaft of the manual transmission (5),
wherein one of sensors (8) detects the actual speed of rotation of the input shaft of the manual transmission (5),
wherein one of the sensors (8) detects a selected gear of the manual transmission (5), wherein the control means (10) is connected by means of a signal line (11) to a servomotor of the manual transmission (5) for selecting the gears,
with which servomotor the gear of the manual transmission (5) can be set,
wherein the control means (10) supplies the STO signal (11) not only to the power output stage (3) but also to the signal electronics (2) and the microcontroller thereof, wherein not only the blocking of the power semiconductors but also a shut-off signal for generating the pulse-width modulated control signals is brought about, so that the motor voltage is redundantly switched off, and wherein the disconnect signal is also used for the electronically effected disconnection of the motor drive power with the exception of the still-present moment of inertia of a motor shaft of the electric motor (4).

2. A vehicle according to Claim 1,
**characterised in that**
sensor signals are supplied to the control means (10), which signals are forwarded to the control means (10) by sensors (8) for detecting status variables of the vehicle or of a part of the vehicle.

3. A method for operating a vehicle according to at least one of the preceding claims,
wherein the vehicle has a control means (10), which is therefore the engine control unit (10) of the vehicle,
wherein the control means (10) is connected to an inverter, having a power output stage (3) and signal electronics (2) which drive the power output stage (3) by means of pulse-width modulated control signals, by means of a signal line (11), wherein values which are detected by sensors (8) of the vehicle are supplied to the control means (10), and/or wherein values which are input via input means are supplied to the control means (10),
**characterised in that**
the control means (10) as a function of the supplied values transmits via the signal line (11) a disconnect signal, in particular shut-off signal, to the inverter which feeds the stator winding of the electric motor (4) of the vehicle,
wherein the disconnect signal, which [effects] safety-related switching-off of the inverter, causes the stator winding of the electric motor (4) which is supplied by the inverter to become current-free,
wherein in order to change the transmission ratio
- in a first step a disconnect signal is transmitted from the control means (10) to the inverter,
- in a subsequent second step the speed of rotation of the input shaft of the manual transmission (5), which is connected non-rotatably to the motor shaft, and the speed of rotation of the motor shaft are monitored to see whether it falls below a critical value
and once it/they fall(s) below the critical speed value such a control signal is transmitted to a servomotor of the manual transmission (5) for switching the gears that the latter sets the specified transmission ratio of the manual transmission (5), in particular engages the gear of the manual transmission (5) which is specified by the control means (10),
wherein in a third step the engaged transmission ratio of the manual transmission (5) is detected and it is checked whether the specified transmission ratio is set and the specified gear is engaged, and dependent on the result of the check the disconnect signal is switched off and therefore the inverter is released for regulated operation, so that current is supplied to the stator winding,
wherein the disconnect signal is an STO signal and is transmitted on one hand to the power output stage (3) of the inverter and on the other hand also to the signal electronics (2), so that once the disconnect signal has been received by the signal electronics (2) the generation of pulse-width modulated control signals is stopped, so that the motor voltage is redundantly switched off,
and wherein the disconnect signal is also used for the electronically effected disconnection of the motor drive power with the exception of the still-present moment of inertia of a motor shaft of the electric motor (4), in order to permit selection of the gear of the manual transmission (5).

4. A method according to at least one of the preceding claims,
**characterised in that**
it is determined by the control means (10) from sensor signals whether the vehicle is in a dangerous state, with a disconnect signal being transmitted to the inverter dependent thereon.

## Revendications

1. Véhicule équipé d'une alimentation (1) en puissance électrique telle qu'une batterie ou un accumulateur, voire un générateur électrique entraîné par un moteur à combustion interne, et d'un moteur électrique (4) pouvant être alimenté par un onduleur, une commande (10), plus précisément un appareil (10) de commande du moteur dudit véhicule, étant raccordé(e), au moyen d'une ligne de signaux (11), audit onduleur muni d'un étage final de puissance (3) et d'une électronique de signaux (2) pilotant ledit étage final de puissance (3) par l'intermédiaire de signaux de pilotage à modulation de largeurs d'impulsions,
du courant pouvant être délivré à l'enroulement statorique dudit moteur électrique (4) par des semi-conducteurs de puissance de l'étage final de puissance (3) dudit onduleur, **caractérisé par le fait que**
la ligne de signaux (11) est réalisée, et raccordée à l'électronique de signaux (2) et à l'étage final de puissance (3), de telle sorte que l'alimentation en courant de l'enroulement statorique puisse être interrompue par un signal de déconnexion qui est adressé à l'onduleur par la commande, par l'intermédiaire de ladite ligne de signaux (11), et qui correspond à une mise hors circuit dudit onduleur à des fins de sûreté, c'est-à-dire à un signal STO,
sachant que le moteur électrique (4) entraîne les roues du véhicule par l'intermédiaire d'au moins un sélecteur de vitesses (5), et par l'intermédiaire d'un différentiel (6),
l'arbre moteur étant relié à l'arbre d'entrée dudit sélecteur de vitesses (5) avec verrouillage en rotation,
sachant que l'un, parmi plusieurs capteurs (8), détecte la vitesse angulaire effective de l'arbre d'entrée dudit sélecteur de vitesses (5),
l'un desdits capteurs (8) détectant un rapport de vitesse enclenché dudit sélecteur de vitesses (5),
la commande (10) étant raccordée au moyen d'une ligne de signaux (11), en vue de l'enclenchement des rapports de vitesses, à un servomoteur du sélecteur de vitesses (5) par lequel le rapport de vitesse dudit sélecteur de vitesses (5) peut être réglé,
sachant que ladite commande (10) applique ledit signal STO (11) non seulement à l'étage final de puissance (3), mais aussi à l'électronique de signaux (2) et au microcontrôleur de cette dernière en provoquant, de la sorte, non seulement la désactivation des semi-conducteurs de puissance, mais également un signal de mise hors circuit ciblant la génération des signaux de pilotage à modulation de largeurs d'impulsions, ce qui implique une coupure redondante de la tension du moteur, et sachant que le signal de déconnexion est également utilisé pour le découplage de la puissance d'entraînement du moteur, provoqué électroniquement, à l'exception du moment d'inertie subsistant d'un arbre moteur dudit moteur électrique (4).

2. Véhicule selon la revendication 1,
**caractérisé par le fait que**
des signaux, émanant de capteurs (8) affectés à la détection de grandeurs d'état du véhicule ou d'une partie dudit véhicule, sont appliqués à la commande (10).

3. Procédé d'actionnement d'un véhicule conforme à au moins l'une des revendications précédentes,
ledit véhicule étant doté d'une commande (10) se présentant, plus précisément, comme un appareil (10) de commande du moteur dudit véhicule,
ladite commande (10) étant raccordée, au moyen d'une ligne de signaux (11), à un onduleur muni d'un étage final de puissance (3) et d'une électronique de signaux (2) pilotant ledit étage final de puissance (3) par l'intermédiaire de signaux de pilotage à modulation de largeurs d'impulsions, sachant que des valeurs, détectées par des capteurs (8) dudit véhicule, sont délivrées à ladite commande (10), et/ou sachant que des valeurs, entrées par l'intermédiaire de moyens de saisie, sont délivrées à ladite commande (10), **caractérisé par le fait que**
la commande (10) transmet par l'intermédiaire de la ligne de signaux (11), en fonction des valeurs délivrées, un signal de déconnexion, notamment un signal de mise hors circuit à l'onduleur qui alimente l'enroulement statorique du moteur électrique (4) du véhicule, lequel signal de déconnexion, correspondant à une mise hors circuit dudit onduleur à des fins de sûreté, a pour effet de priver de courant ledit enroulement statorique dudit moteur électrique (4) alimenté par ledit onduleur,
sachant que, pour modifier le rapport de démultiplication,
- au cours d'une première étape, un signal de déconnexion est transmis à l'onduleur par la commande (10),
- au cours d'une deuxième étape successive, la vitesse angulaire de l'arbre d'entrée du sélecteur de vitesses (5), relié à l'arbre moteur avec verrouillage en rotation, et la vitesse angulaire dudit arbre moteur, sont surveillées quant au dépassement négatif d'une valeur critique
et, après dépassement négatif de ladite valeur critique des vitesses angulaires, un signal de pilotage est transmis à un servomoteur du sélecteur de vitesses (5), en vue de l'enclenchement des rapports de vitesses, de façon telle que ledit servomoteur règle le rapport de démultiplication préétabli dudit sélecteur de vitesses (5) et enclenche, en particulier, le rapport de vitesse dudit sélecteur de vitesses (5) préétabli par la commande (10),
sachant que, au cours d'une troisième étape, le rapport de démultiplication engagé dudit sélecteur de vitesses (5) est détecté, et il est vérifié si le rapport de démultiplication préétabli est réglé et si le rapport de vitesse préétabli est enclenché et, en fonction du résultat de la vérification, le signal de déconnexion est désactivé et l'onduleur est ainsi validé pour le fonctionnement régulé, si bien que du courant est fourni à l'enroulement statorique,
sachant que ledit signal de déconnexion est un signal STO et est transmis, d'une part, à l'étage final de puissance (3) de l'onduleur et, d'autre part également, à l'électronique de signaux (2), de sorte qu'il est mis un terme à la génération de signaux de pilotage à modulation de largeurs d'impulsions par ladite électronique de signaux (2), après obtention dudit signal de déconnexion, ce qui implique une coupure redondante de la tension du moteur,
et sachant que le signal de déconnexion est également utilisé pour le découplage de la puissance d'entraînement du moteur, provoqué électroniquement, à l'exception du moment d'inertie subsistant d'un arbre moteur dudit moteur électrique (4), de façon à permettre un enclenchement du rapport de vitesse dudit sélecteur de vitesses (5).

4. Procédé selon au moins l'une des revendications précédentes,
**caractérisé par le fait**
**que** la commande (10) détermine, sur la base de signaux de capteurs, si le véhicule se trouve dans une situation périlleuse, en fonction de quoi un signal de déconnexion est transmis à l'onduleur.
